# EUROPEAN PATENT APPLICATION

(11) **EP 1 804 525 A2**
(43) Date of publication of application: **04.07.2007**
(21) Application number: 06425860.1
(22) Date of filing: 22.12.2006
(51) Int. Cl.: H04Q 1/14

(54) **Access module for termination strips of telephone cables made of copper**

(30) Priority: 28.12.2005 IT RM20050651
(71) Applicant: C.I.S. Sud s.r.l., 00040 Ariccia (RM) (IT)
(72) Inventor: Bernardini, Giuseppe, 00040 Ariccia (RM) (IT)
(74) Representative: Santi, Filippo

(57) **Abstract**

The invention concerns an access module for termination strips of telephone cables made of copper, in particular for IDC strips (1), comprising one or more elements (9) for directly accessing to the terminations of the couples of telephone cables of each packet (3) of said termination strip (1) and an element (8) for connecting the accessing circuits of each packet (3) and for housing the necessary electronic devices, said direct access elements (9) being positioned at the front of said termination strip (1) and being connected to the terminations of the telephone cables coming from the private lines, the terminations of the cables coming from the main station remaining freely accessible, and said element (8) for connecting the accessing circuits being arranged on a side of said termination strip (1).

## Description

The present invention concerns an access module for termination strips of telephone cables made of copper, in particular for IDC strips.

The invention refers to the field of telecommunication applications and in particular to the field of telephone communication and specifically refers to the termination of telephone cables made of copper.

According to the prior art, the telephone electric circuit (a couple of conductors) connecting each single user to the telephone main station, starts from the single user's location and is conveyed in telephonic cables, terminating in the main station in correspondence of termination modules, called IDC strips (this initials standing for the English wording "insulation displacement connection", standing for a particular kind of connection with insulating dislocation) and from here the couple of conductors, also defined permutation, arrives at the station's transmission apparatuses. IDC strips, therefore, are useful to connect and/or disconnect single users and station's apparatuses.

At present, IDC strips commonly on sale are divided in subunits, called packets, for terminating a plurality of couples, said packets being located one upon the other so to realise a termination module, i.e. the IDC strip. The number of couples for each packet and the number of packets for each IDC strip can vary. As an example, with eight couples for each packet and twelve packets for each strip a module of ninety couples is obtained.

Access modules are apparatuses permitting to reach the couples of conductors made of copper already fixed to the termination strips and to connect them to external devices.

Thus, the access module permits to carry out a remote control of telephone lines, by means of its use in combination with a remote control device and a local apparatus of measurement.

More details on the functioning of access modules are described in the Italian patent application No. RM2003A00282 and in the following Italian application for utility model No. RM2005U000023, in the name of the same Applicant, the content of which is herein encorporated by reference.

The access modules of termination strips according to the cited applications, as well as those according to the prior art, substantially provides for a series of access elements, comprising the pertinent electronic equipment, which can be positioned one upon the other and which are inserted in the packets of the pertinent IDC termination strip in a movable way, in contact with the reciprocal contact areas between each couple of metallic elastic conductive elements electrically connecting the cable coming from the private line and that coming from the main station, and other vertical elements for connecting said access elements with a local measurement apparatus.
However, even if they achieve the prefixed aims, access modules described therein have the notable drawback of inhibiting the possibility to directly operate on the termination strip, during the intervention of maintenance of the "permutations" and of being interferent with respect to the configuretion of the strip itself.

In IDC strips, all the cables coming from the single private lines gain access to the strip from the same side (generally but not necessarily the left side), while the lines coming from the main station, called permutations, are all connected on the opposed side.

Permutations are intended for being changed and/or permutated, depending on the variation of the user's connection activity, or to modify the services to which the user can access. During this activity of intervention and/or maintenance it is necessary removing and subsequently restoring the different elements presently making the access modules.

The aim of the present invention is that of overcoming said drawbacks and making easier the operations of intervention and/or maintenance of the permutation coming together to a telephone cable termination strip, in particular an IDC strip, through the removal of the access elements of the known kind, one for each packet of the strip, and their substitution with one or more improved access modules.

These and other results are achieved according to the present invention by providing a new access module meeting the following requirements:
- after it is inserted, must not be removed during the following operations on the permutations;
- is particularly compact in its overall obstruction dimensions and in the number of elements composing it;
- is indifferently applicable on the right and/or left side of the IDC strip;
- can be coupled firmly to the IDC strip by means of a mechanically stable disposition.

It is therefore a specific object of the present invention an access module for termination strips of telephone cables made of copper, in particular for IDC strips, comprising one or more elements for directly accessing to the terminations of the couples of telephone cables of each packet of said termination strip and an element for connecting the circuit accessing each packet and for housing the necessary electronic devices, said direct access elements being located at the front of said termination strip and being connected to the terminations of the telephone cables coming from the private lines, the terminations of the cables coming from the main station remaining freely accessible, and said element for connecting the accessing circuits being arranged on a side of said termination strip.

In particular, according to the present invention, said elements for directly accessing to the terminations of the couples of telephone cables on the "private lines side" comprise a box-shaped body, opened on a side for gaining access to a plurality of connection surfaces, one for each termination of cable couples of the packet, connected to respective connectors of the direct access element, for coupling with correspondent connectors of the element for connecting with the accessing circuits.

According to the present invention, said connection surfaces can be constituted by double face reeds.

Further, according to the invention, said element for connecting the accessing circuits of each packet, and for housing the necessary electronic devices, comprises a box-shaped body, inside which a plurality of layers is located, constituted by a card for housing electronic circuits, connected one to the other by means of a common circuit.

Preferably, according to the invention, the number of said layers is equal to the number of packets of the termination strip to which the access module is applied.

Moreover, according to the present invention, said common circuit is located on a wall of the box-shaped body of the element for connecting the accessing circuits and is connected to the circuits of each card by means of connectors of said cards and with correspondent connectors of said common circuit.

Finally, according to the present invention, said elements for directly accessing to the terminations of the couples of telephone cables comprise phisical means for coupling with correspondent means on said packets, in particular mortise coupling means, and said element for connecting the accessing circuits of each packet and for housing the necessary electronic devices comprises physical means for coupling with corresponding means on said termination strip.

The present invention will now be described, for illustrative, non-limitative purposes, according to its preferred embodiments, with particular reference to the figures of the enclosed drawings, in which:
- figure 1 shows a perspective view of a termination module for telephone cables made of copper, in particular an IDC strip;
- figure 2 shows a perspective view of a first element of the access module according to the present invention, in particular a view of the element for connecting the accessing circuits of each packet and for housing the necessary electronic devices, which is positioned on a side of the termination module of figure 1, on its side for connecting the cables coming from the private lines, in the present case on the left side;
- figures 3A and 3B respectively show a perspective front view and a perspective rear view of a second element of the access module of figure 2, in particular of one of the elements for directly accessing to the terminations of the couples of telephone cables;
- figure 4 shows a perspective view of the access module according to the present invention, applied to the IDC strip of figure 1, in which only one of the elements for direct access to the terminations of the strip is present;
- figure 5 shows a perspective view of the access module according to the present invention, applied to the IDC strip of figure 1, in which all the elements for direct access to the terminations of the strip are present;
- figure 6 shows a perspective view of one of the elements for direct access to the terminations of the strip according to the present invention, applied to a termination packet of the strip, and of the corresponding layer of electronic circuits inside the element for connecting the circuits for accessing to the single packets (not shown);
- figure 7 shows a perspective front view of the element for connecting the circuits for accessing to the single packets, in which the lateral protective plate was taken apart from the rest of the body of the element; and
- figure 8 shows a perspective rear view of the element for connecting the accessing circuits ai singoli packets.

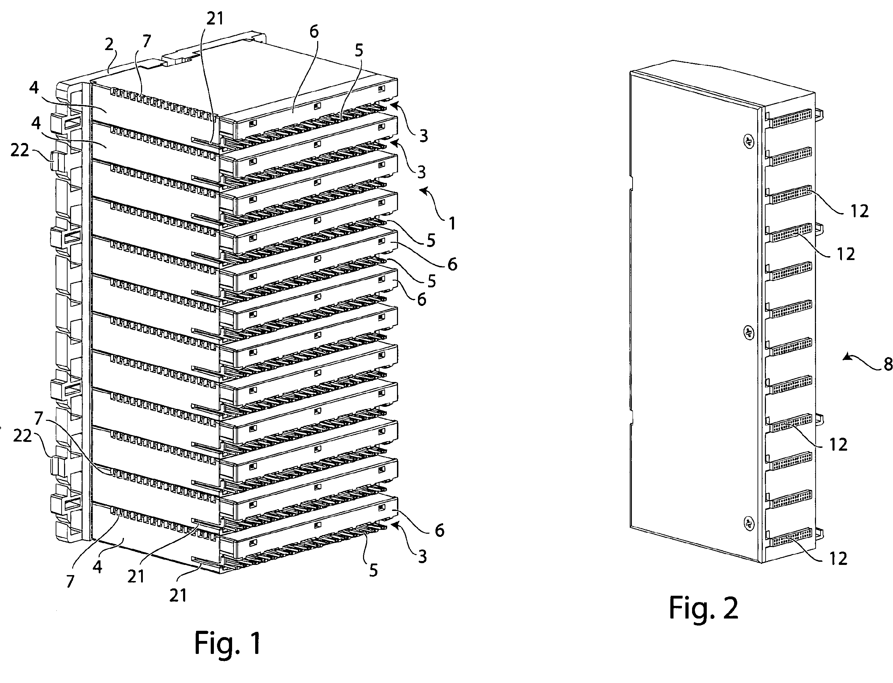

Reference being preliminary made to figure 1, an IDC strip is shown, indicated as a whole through the numeric reference 1, of the kind made object of the patent application N. RM2005A000528 in the name of the same Applicant.

The strip 1 is constituted by a plurality of elements, in particular by a support structure 2, on which a plurality of packets 3 is positioned, inside the relative box-shaped lids 4. In the strip 1 shown in the figure, the most advanced portions of the connection fly springs 5 on the "main station side" are also visible, in the shown case being positioned below the corresponding and specular connection fly springs on the "private lines side" (not shown because they are covered by the suitable front jigs 6), and realise the contact of each couple of cables couple of cables on the "private line side" and on the "main station side". Further, the figure shows, for each box-shaped lid 4, the openings 7 for the entrance of the cables coming, in the case shown, from private lines, while the cables coming from the main station are entered in the strip 1 through corresponding openings on the opposed side of the strip 1. It is to be understood that, if in this case the cables on the "private lines side" reach the strip 1 on its left side while the cables on the "main station side" reach it on its right side, nothing prevents from exchanging such geometrical configuration, i.e. cables on the "private lines side" from arriving to the strip 1 on its right side while the cables on the "main station side" arrives on its left side.

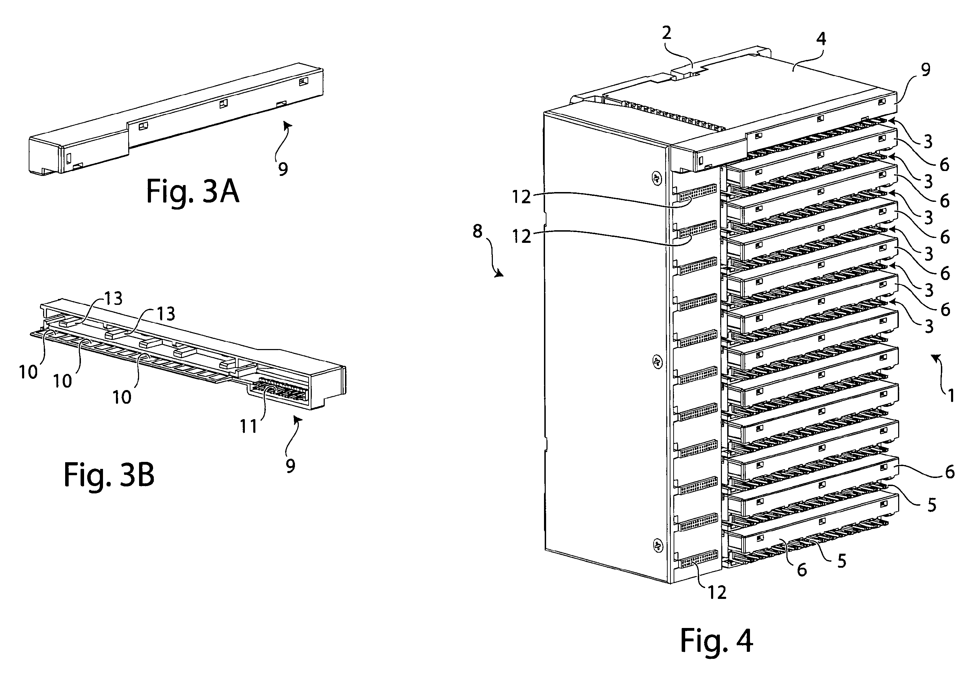

The access module according to the present invention is composed of different elements, figure 2 and figures 3A and 3B respectively showing the element for connecting the circuits for accessing to the single packets and for housing the necessary electronic devices, i.e. the vertical element 8 and one of the elements for directly accessing to the terminations of the couples of telephone cables, i.e. one of the horizontal elements 9 constituting each access module. In particular, the number of horizontal elements 9 is equal to the number of packets 3 constituting the strip 1. The access module according to the present invention is therefore particularly compact and easy to realise, being constituted, for each strip 1, only of two kinds of different elements, i.e. said vertical 8 and said horizontal elements 9, all identical.

The vertical element 8 encloses inside all the electronics necessary to the access module, while the horizontal elements 9 realise the contacts with the terminations of the cables of the strip 1, through the contact between the double face reeds 10 and the connection fly springs connected to the telephone cable on the "private line side", i.e. in the shown case to the upper connection fly springs (not shown but specular with respect to the connection fly springs 5 on the "main station side") of each packet 3.

The reeds 10 are connected to respective connection plugs 11, realising the contact with the correspondent connettors 12 of the vertical element 8.

On the rear side of each horizontal element 9 some reliefs 13 are also realised for the mortise coupling with correspondent seats (not shown) of the packet 3, so to make the horizontal element 8 mechanically integral with the strip 1.

Making reference to figure 4, on a strip 1 the vertical element 8 of the access module according to the present invention is applied together with only one of the horizontal elements 9. The horizontal element 9 replaces, during the insertion of the access module, the jig 6 provided for each packet 3 of the strip 1.

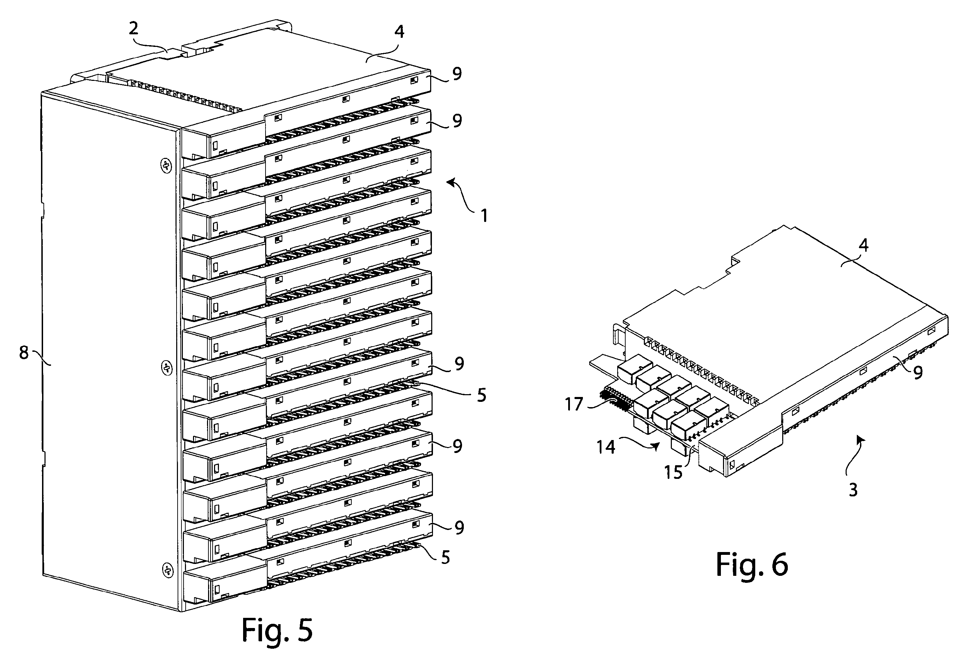

Figure 5 shows a strip 1 on which, besides the vertical element 8, all the horizontal elements 9 of the access module according to the present invention are applied. Figure 5 shows how the connection fly springs 5 on the "main station side", in front of the strip 1, remain accessible, for the direct intervention during the operations of permutation, without any need of removing the horizontal element 9 or the vertical element 8.

At last, making reference to figure 6, showing one of the horizontal elements 9 of the access module according to the present invention, applied to a termination packet 3 of an IDC strip, and the correspondent layer 14 of electronic circuits inside the vertical element (not shown) of the access module, the vertical element 8 is constituted internally by many layers of the same kind of the layer 14, each constituted by a card 15 for housing electronic circuits, said layers being as many as the packets 3 of the IDC strip to which the access module is applied.

Differnt layers 14 of electronic circuits are connected one to the other by a common vertical electronic circuit arranged of the wall 16 of the vertical element 8, on which, in correspondence of each layer 14, some connectors (not shown) for coupling with the connection plugs 17 of each layer 14 are shown. The wall 16 housing the electronic circuit for connecting the different layers of the vertical element 8 is covered by a protection plate 18.

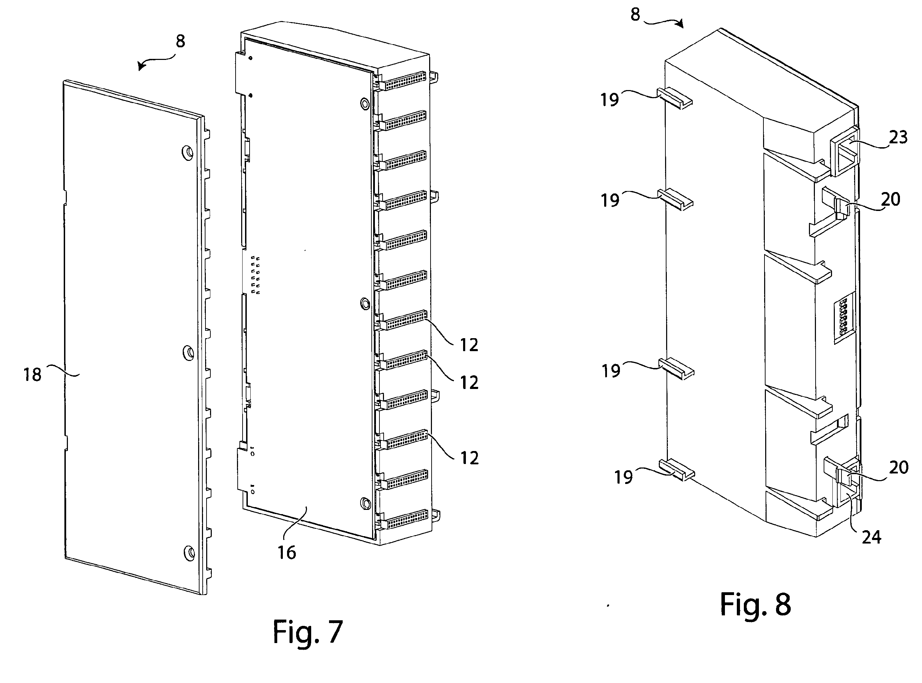

Making reference to figure 8, the view of the rear portion of the vertical element 8 of the access module of the present invention presents some lateral hooking tabs 19 and some rear hooking tabs 20, respectively for coupling with correspondent hooking seats 21 on the box-shaped lid 4 and with hooking seats 22 on the support structure 2, making it mechanically integral with the strip 1.

The structure of the vertical element 8 permits to install it indifferently on the right side or on the left side of the strip 1, as a consequence of a simple vertical overturning. In this way it is always possible to place the access module on the side where the cables of the private lines arrive (according to the dispositions of the operator regarding the choice of the side), and from where they will never be removed.

At last, figure 8 shows two openings on the rear face of the vertical element 8 of the access module, respectively an opening for the entrance 23 and an opening for the exit 24 of bundles of cables, the function of which is that of allowing the passage of cable jumpers connecting two or more vertical element 8 of two neighbouring strips 1.

The advantages of an access module for termination strips of telephone cable, in particular for an IDC strip, realised according to the present invention, are evident. In fact, the possibility of accessing to the contacts of the terminations on the side of the main station during the interventions on the permutations, without any need to move the access module or some parts of it makes notably easy the management and maintenance operations on the strip, even when the access module is present.

Further, the access module according to the present invention is particularly compact in its overall dimensions and in the number of elements consituting it.

Further, the embodiment of the coupling components of the access module with the termination strip ensures a mechanically stable disposition of the access module.

Finally, the access module is extremely versatile and can be indifferently applied on the right and/or left side of the termination strip.

The present invention was described for illustrative, non-limitative purposes, according to its preferred embodiments, but it is to be understood that any variations and/or modification can be made by the persons skilled in the art without for this being out of the relative scope of protection, as defined by the enclosed claims.

## Claims

1. Access module for termination strips of telephone cables made of copper, in particular for IDC strips (1), **characterised in that** it comprises one or more elements (9) for directly accessing to the terminations of the couples of telephone cables of each packet (3) of said termination strip (1) and an element (8) for connecting the circuit accessing each packet (3) and for housing the necessary electronic devices, said direct access elements (9) being located at the front of said termination strip (1) and being connected to the terminations of the telephone cables coming from the private lines, the terminations of the cables coming from the main station remaining freely accessible, and said element (8) for connecting the accessing circuit being arranged on a side of said termination strip (1).

2. Access module according to claim 1, **characterised in that** said elements (9) for directly accessing to the terminations of the couples of telephone cables on the "private lines side" comprise a box-shaped body opened on a side where a plurality of connection surfaces is present, one for each termination of cable couples of the packet (3), connected to respective connectors (11) of the direct access element (9), for coupling with correspondent connectors (12) of the element (8) for connecting with the accessing circuits.

3. Access module according to claim 2, **characterised in that** said connection surfaces are constituted by double face reeds (10).

4. Access module according to any of the preceding claims, **characterised in that** said element (8) for connecting with the accessing circuits of each packet (3) and for housing the necessary electronic devices comprises a box-shaped body inside which a plurality of layers (14) is located, constituted by a card (15) for housing electronic circuits, connected one to the other by means of a common circuit.

5. Access module according to claim 4, **characterised in that** the number of said layers (14) is equal to the number of packets (3) of the termination strip to which the access module is applied.

6. Access module according to claim 4 o 5, **characterised in that** said common circuit is located on a wall of the box-shaped body of the element (8) for connecting the accessing circuits.

7. Access module according to any of claims 4-6, **characterised in that** said common circuit is connected to the circuits of each card by means of connectors (17) of said cards and with correspondent connectors of said common circuit.

8. Access module according to any of the preceding claims, **characterised in that** said elements (9) for directly accessing to the terminations of the couples of telephone cables comprise phisical means for coupling with correspondent means on said packets (3), in particular mortise coupling means.

9. Access module according to any of the preceding claims, **characterised in that** said element (8) for connecting the accessing circuits of each packet (3) and for housing the necessary electronic devices comprises physical means for coupling with corresponding means on said termination strip (1).
